# EUROPÄISCHE PATENTSCHRIFT

(11) **EP 1 631 767 B1**
(45) Veröffentlichungstag und Bekanntmachung des Hinweises auf die Patenterteilung: **16.04.2008**
(21) Anmeldenummer: 03775136.9
(22) Anmeldetag: 22.08.2003
(51) Int. Cl.: F16N 11/08

(54) **VERTEILERELEMENT FÜR SCHMIERANLAGEN**
DISTRIBUTING ELEMENT FOR LUBRICATING SYSTEMS
ELEMENT DISTRIBUTEUR POUR DES SYSTEMES DE LUBRIFICATION

(30) Priorität: 21.06.2003 DE 20309553 U
(43) Veröffentlichungstag der Anmeldung: 08.03.2006
(73) Patentinhaber: Lincoln GmbH, 69190 Walldorf (DE)
(72) Erfinder: PALUNCIC, Zdravko, 67067 Ludwigshafen (DE); SCHÖNFELD, Andreas, 68789 St. Leon-Rot (DE)
(74) Vertreter: KEIL & SCHAAFHAUSEN Patentanwälte
(86) Internationale Anmeldenummer: PCT/EP2003/009338
(87) Internationale Veröffentlichungsnummer: WO 2004/113784

(56) Entgegenhaltungen:
- WO-A-03/042595
- DE-A- 19 843 695
- US-A- 6 145 625
- US-A1- 2002 112 759
- US-B1- 6 276 492

## Beschreibung

Die Erfindung bezieht sich auf ein Verteilerelement, insbesondere einen Einleitungsverteiler, zur Dosierung von Schmierstoffen, wie Fett, für Schmieranlagen.

Ein bekannter Schmierstoffverteiler dieser Art, zum Beispiel WO 03042595 weist einen mit einer Bohrung versehenen Ventilkolben auf, welcher aus einer Ausgangslage, in welcher die Bohrung eine Verbindung von einer Dosierkammer über einen Verbindungskanal zu einer Zuteilkammer freigibt, unter dem an einem Schmierstoffeinlass anstehenden Schmierstoffdruck gegen die Wirkung einer einzigen Rückstellfeder bis in eine Dosierlage verschiebbar ist, in welcher der Ventilkolben einen Durchlass von dem Schmierstoffeinlass zu dem Verbindungskanal und damit zu der Dosierkammer freigibt. Dieser Schmierstoffverteiler hat ferner einen Zuteilkolben, welcher unter der Wirkung von in die Dosierkammer eintretendem Schmierstoff gegen die Wirkung der genannten einzigen Rückstellfeder verschiebbar ist. Durch den sich in der Dosierkammer aufbauenden Schmierstoffdruck wird die in der Zuteilkammer zwischen Ventilkolben und Zuteilkolben vorhandene Schmierstoffmenge in wenigstens einen Schmierstoffauslass verdrängt und der Ventilkolben wird bis zum Erreichen des Druckausgleichspunktes von dem Zuteilkolben in eine Zwischenlage verfahren, in welcher der Ventilkolben den Durchlass von dem Schmierstoffeinlass zu dem Verbindungskanal und damit zu der Dosierkammer absperrt. Bei einer nachfolgenden Druckentlastung an dem Schmierstoffeinlass werden der Ventilkolben und danach auch der Zuteilkolben von der einzigen Rückstellfeder in seine Ausgangslage zurück überführt. Bei einem derartigen Verteilerelement muss nachteiligerweise der an dem Ventileinlass anstehende hydraulische Schmierstoffdruck (Arbeitsdruck) von bspw. bis zu 250 bar für die erforderliche Druckentlastung auf einen verhältnismäßig niedrigen Restdruck von bspw. etwa 45 bar abgesenkt werden, damit die Funktionsfähigkeit sichergestellt ist. Die bekannte Ausführung kann insbesondere dann, wenn mehrere Schmierstoffverteiler hintereinander geschaltet sind, wegen des über die Schmierstoffleitung auftretenden Druckabfalls zu einer Funktionsbeeinträchtigung der letzten Schmierstoffverteiler führen. Das Problem eines zu niedrigen Entlastungsdruckes kann nicht dadurch gelöst werden, dass die im Stand der Technik vorhandene einzige Rückstellfeder verstärkt wird, da diese nicht nur mit dem Ventilkolben sondern in der anderen Richtung auch mit dem Zuteilkolben zusammen arbeitet. Eine stärkere Rückstellfeder hätte eine Erhöhung des Druckes zur Folge, welcher den Zuteilkolben in seine Endlage bringen soll.

Aufgabe der vorliegenden Erfindung ist es, ein Verteilerelement der geschilderten Art vorzuschlagen, bei welcher der Entlastungsdruck (Restdruck) nennenswert, d.h. beispielsweise um etwa das Doppelte, höher ist als bei dem bekannten Verteilerelement, jedoch keine Erhöhung des minimalen Arbeitsdruckes, d.h. des Druckes, bei welchem sich der Zuteilkolben in seiner verschobenen Endposition befindet, erfolgt.

Diese Aufgabe wird erfindungsgemäß mit einem Verteilerelement zur Dosierung von Schmierstoff, wie Fett, für Schmieranlagen beispielsweise im Wesentlichen dadurch gelöst, dass dieses einen mit einer Bohrung ausgestatteten Ventilkolben aufweist, welcher aus einer Ausgangslage, in welcher die Bohrung eine Verbindung zwischen einer Zuteilkammer und einer Dosierkammer über einen Verbindungskanal freigibt, unter dem an einem Schmierstoffeinlass anstehenden Schmierstoffdruck gegen die Wirkung einer ersten Rückstellfeder bis in eine Dosierlage verschiebbar ist, in welche der Ventilkolben einen Durchlass von dem Schmierstoffeinlass zu dem Verbindungskanal und damit zu der Dosierkammer freigibt. Ferner soll erfindungsgemäß ein Zuteilungskolben vorgesehen sein, welcher unter der Wirkung von in die Dosierkammer eintretendem Schmierstoff gegen die Wirkung einer zweiten Rückstellfeder verschiebbar ist, wodurch die in der Zuteilkammer zwischen Ventilkolben und Zuteilkolben vorhandene Schmierstoffmenge in wenigstens einen Schmierstoffauslass verdrängt wird. Der Ventilkolben fährt ggf. bis zum Erreichen des Druckausgleichspunktes in eine Zwischenlage, in welcher er den Durchlass von dem Schmierstoffeinlass zu dem Verbindungskanal und damit der Dosierkammer absperrt. Bei Druckentlastung an dem Schmierstoffeinlass werden der Ventilkolben von der ersten Rückstellfeder und danach der Zuteilkolben von der zweiten Rückstellfeder in ihre Ausgangslagen zurückgeführt.

Aufgrund der erfindungsgemäßen Erhöhung des Restdruckes werden kürzere Schaltzeiten erreicht und es können Leitungen größerer Länge und/oder geringeren Durchmessers eingesetzt werden, was Kosten einspart. Trotzdem kann der minimale Arbeitsdruck niedrig gehalten werden. Federstärke und Federcharakteristik der beiden Rückstellfedern können unter Berücksichtigung der Kolben-, Bohrungs- und Kanalquerschnitte gesondert ausgelegt werden.

Erfindungsgemäß ist also im Vergleich zum Stand der Technik die einzige Rückstellfeder durch zwei getrennt wirksame Rückstellfedern ersetzt; die erste Rückstellfeder arbeitet alleine noch mit dem Ventilkolben zusammen, während die zweite Rückstellfeder lediglich noch für die Rückstellung des Zuteilkolbens verantwortlich ist. Die Auslegung der Rückstellfedern kann je nach den vorhandenen Gegebenheiten getroffen werden bspw. in Abhängigkeit von den vorhandenen Leitungslängen und -querschnitten, Dosiervolumina, Arbeitsdrücken, Restdrücken, und dgl.. Hierdurch kann auf einfache Weise erreicht werden, dass trotz der Erhöhung des Restdruckes der minimale Arbeitsdruck nicht erhöht wird, sondern niedrig gehalten werden kann.

Auf konstruktiv besonders einfache Weise lässt sich die erfindungsgemäße Lösung bei einem Ausführungsbeispiel dadurch verwirklichen, dass zwischen der ersten Rückstellfeder und der zweiten Rückstellfeder ein z.B. im Wesentlichen hohlzylindrischer Abstützkörper für die beiden Rückstellfedern angeordnet ist. Der in dem Abstützkörper ggf. vorhandene Durchlass gestattet den Durchtritt einer dem Ventilkolben zugekehrten Verlängerung des Zuteilkolbens, so dass bei Bestätigung des Zuteilkolbens durch den in der Dosierkammer aufgebauten Druck der Ventilkörper in Richtung seiner Ausgangslage von dem Zuteilkolben zunächst bis in eine Zwischenlage verschiebbar ist, in welcher der Schmierstoffeinlass von dem Verbindungskanal getrennt ist.

In einer noch weiteren Ausgestaltung der Erfindung sind zur Vereinfachung der Herstellung und der Verbesserung der Funktionsfähigkeit der Ventilkolben, der Zuteilkolben, der Abstützkörper und die beiden Rückstellfedern in einem gemeinsamen geraden Durchgangskanal eines Ventilgehäuses axial zueinander ausgerichtet angeordnet.

Zweckmäßigerweise ist zur Platzersparnis und zuverlässigen Abstützung die zweite Rückstellfeder als Wendelfeder ausgebildet, welche den Zuteilkolben umgibt.

Bei einer anderen Ausführungsform der Erfindung wird dadurch ermöglicht, dass die zweite als Wendelfeder ausgebildete Rückstellfeder jedenfalls mit ihrem dem Ventilkolben zugewandten Ende die ebenfalls als Wendelfeder ausgebildete erste Rückstellfeder umgibt, erreicht, dass bei vorgegebener Länge der Rückstellfedern eine geringe Gesamtlänge des Verteilerelements erreicht werden kann.

Dabei ist es von Vorteil, wenn die erste als Wendelfeder ausgebildete Rückstellfeder mit ihrem dem Zuteilkolben zugewandten Ende in einem hülsenförmigen Abstützkörper aufgenommen ist, welcher von der als Wendelfeder ausgebildeten zweiten Rückstellfeder umgeben ist. Die erste Rückstellfeder kann sich dabei auf eine radial nach innen weisenden Umbördelung an dem dem Ventilkolben abgewandten Ende des hülsenförmigen Abstützkörpers abstützen und ist in dem hülsenförmigen Abstützkörper geführt. Umgekehrt kann die zweite Rückstellfeder auf der Außenseite des hülsenförmigen Abstützkörpers anliegen und sich auf einen radial nach außen weisenden Fußflansch des Abstützkörpers abstützen.

Der Abstützkörper kann dabei seinerseits an einer von dem Ventilkörper abgewandten Anlageschulter des Ventilgehäuses anliegen.

Es zeigen:

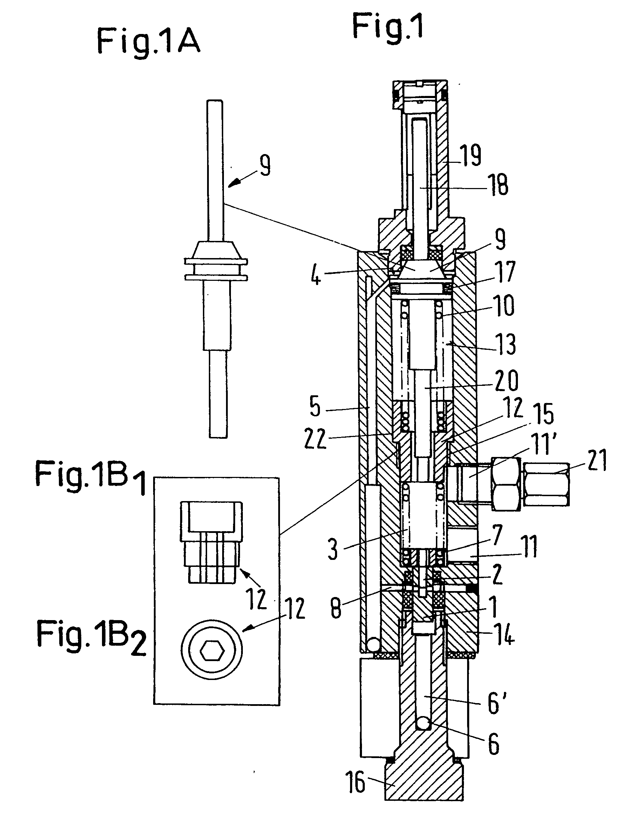

- Fig. 1: teilweise in der Längsmittelebene geschnitten ein die Erfindung aufweisenden als Einleitungsverteiler ausgebildetes Ventilelement gemäß einem Ausführungsbeispiel,
- Fig. 1A: den aus Fig. 1 herausgezeichneten Zuteilungskolben in Seitenansicht,
- Fig. 1B₁ und 1B₂: in Seitenansicht sowie in Draufsicht den aus Fig. 1 herausgezeichneten Abstützkörper.
- Fig. 2: eine Darstellung gemäß Fig. 1 für eine anderes Ausführungsbeispiel eines erfindungsgemäßen Verteilerelements, und
- Fig. 2A: eine Darstellung des Details IIa von Fig 2.

Der in der Zeichnung dargestellte Einleitungsverteiler zur Dosierung von Schmierstoffen, wie Fett, für Einleitungsschmieranlagen weist ein Verteilergehäuse 14 mit einem sich über die Länge des Verteilergehäuses 14 erstreckenden Durchgangskanal 13 auf. In das untere Ende des Ventilgehäuses 14 ist ein unterer Verschlusskörper 16 mit einem Schmierstoffeinlass 6 eingeschraubt. Der Schmierstoffeinlass 6 mündet in einen axialen Einlasskanal 6', welcher zu einem in dem Durchgangskanal 13 axial verschieblich aufgenommenen und sich auf der dem Schmierstoffeinlass 6 gegenüberliegenden Seite in dem Durchgangskanal 13 koaxial angeordneten ersten Rückstellfeder 7 abstützenden Ventilkolben 1 führt. Die erste Rückstellfeder 7 liegt mit ihren dem Ventilkolben 1 gegenüber liegenden Ende an einem hohlzylindrischen Abstützkörper 12 an, welcher mittels Gewindeverbindung 17 und Anlageschulter 22 in definierter Position in dem Durchgangskanal 13 axial festgelegt ist.

In Fig. 1 nimmt der Ventilkolben 1 seine am Beginn eines Schmierzyklus vorgesehene Ausgangslage ein, welche der Ventilkolben 1 nach Beendigung des jeweils vorhergehenden Schmierzyklus und in einer ggf. darauf folgenden Schmierpause erreicht. Der Ventilkolben 1 hat eine, in dem dargestellten Fall über Eck laufende, Bohrung 2, welche einerseits über einen axial verlaufenden Bohrungsabschnitt mit einer in dem Durchgangskanal 13 vor dem Ventilkolben 1 gebildeten Zuteilkammer 3 in Verbindung steht, und andererseits über einen radial verlaufenden Bohrungsabschnitt mit einem sich in dem Ventilgehäuse 14 radial anschließenden Durchlass 8, welcher in einen sich in Längsrichtung parallel zu dem Durchgangskanal 3 erstreckenden Verbindungskanal 5 mündet.

Der Verbindungskanal 5 führt an seinem oberen, d.h. seinem dem Ventilkolben 1 abgewandten, Ende in eine Dosierkammer 4, welche innerhalb des Durchgangskanals 13 gegenüber dem Ventilkolben 1 von einem mit einer Umfangsdichtung 17 versehenen Zuteilkolben 9 abgegrenzt ist. Der Zuteilkolben 9 stützt sich in Richtung des Ventilkolbens 1 über eine zweite Rückstellfeder 10 auf der dem Ventilkolben 1 abgewandten Seite des Abstützkörpers 12 ab.

Der Zuteilkolben 9 kann in der in Fig. 1 dargestellten Ausgangslage mit einem Kontrollstiftabschnitt 18 in einen oberen seitlich offenen Verschlusskörper 19 zur optischen Funktionsanzeige hinein ragen. In Richtung des Ventilkolbens 1 kann der Zuteilkolben 9 eine Verlängerung 20 für das Zurückschieben des Ventilkolbens 1 in Richtung dessen Ausgangslage vor dem Ende des Schmierzyklus zunächst in eine Zwischenlage aufweisen, was unten noch beschrieben wird. Das Ventilgehäuse 14 hat wenigstens einen Schmierstoffauslass 11, welcher in der in Fig. 1 dargestellten Ausgangslage des Ventilkörpers 1 ggf. unmittelbar vor dessen zuteilkolbenseitiger Stirnfläche liegt. Ein mit einer Verschlussschraube 21 versehener Schmierstoffdurchlass 11' kann z.B. zum Befüllen des Verteilerelements mit Schmierstoff dienen.

Die Funktionsweise des erfundenen Verteilerelements ist folgende:

In der in Fig. 1 dargestellten Schmierpausenphase ist der an dem Schmierstoffeinlass 6 des Verteilerelements anstehende Druck bis auf einen Restdruck entlastet. Die beiden Rückstellfedern 7, 10 sind auf die jeweils gewünschte und entsprechend ausgelegte Vorspannkraft entspannt. Die Zuteilkammer 3 ist - nach dem ersten Füllen über einen Schmierstoffdurchlass 11' - von dem vorherigen Schmierzyklus mit Schmierstoff gefüllt. Die übereck führende Bohrung 2 verbindet noch die Zuteilkammer 3 über den Verbindungskanal 5 mit der Dosierkammer 4.

Am Beginn der Druckaufbau- und Abschmierphase baut z.B. eine Zentralschmierpumpe den Schmierstoffdruck in der Hauptleitung und in dem Schmierstoffeinlass 6, 6' bis auf einen Arbeitsdruck auf. Der Ventilkolben 1 wird durch den Arbeitsdruck gegen die Wirkung der ersten Rückstellfeder 7 vorgeschoben, bis er den Durchlass 8 in dem Ventilgehäuse 14 zu der Dosierkammer 4 über den Verbindungskanal 5 freigibt. Der von dem Schmierstoffeinlass 6 zugeführte Schmierstoff gelangt sodann durch den Verbindungskanal 5 in die Dosierkammer 4. Der Zuteilkolben 9 wird durch den in der Dosierkammer 4 entstehenden Schmierstoffdruck beaufschlagt und gegen die Wirkung der zweiten Rückstellfeder 10 betätigt. Dabei wird gleichzeitig der ggf. vorhandene Kontrollstiftabschnitt 18 eingezogen. Während dabei auf der einen Seite des Zuteilkolbens 9 die Dosierkammer 4 aufgefüllt wird, verdrängt der Zuteilkolben 9 auf der anderen Seite gegen die Wirkung der zweiten Rückstellfeder 10 eine dosierte Schmierstoffmenge aus der Zuteilkammer 3 unter Schmierstoffdruck zu dem offenen Schmierstoffauslass 11. An den Schmierstoffauslass 11 ist eine (nicht dargestellte) Schmierstellenleitung angeschlossen. Der hydraulische Arbeitsdruck der Schmierstoffpumpe hat in der Abschmierphase einen vorgegebenen Mindestwert von bspw. bis zu 250 bar.

Am Abschluss der Abschmierphase hat der Zuteilkolben 9 die zu dosierende Schmierstoffmenge aus der Zuteilkammer 3 zum Schmierstoffauslass 11 (bzw. 11') verdrängt und mit seiner ggf. vorgesehenen Verlängerung 20 den Ventilkolben 1 bei Erreichen des Druckausgleichspunktes in eine Zwischenposition gefahren, in welcher der Durchlass 8 zu dem Verbindungskanal 5 von dem hinteren Abschnitt des Ventilkolbens 1 abgesperrt ist. Bis zur Betätigung eines Druckentlastungsventils der Schmierstoffpumpe verbleibt das Verteilerelement in dieser Position.

Damit das Verteilerelement umsteuern kann, wird nach Abschluss jeder Abschmierung in einer anschließenden Druckentlastungsphase die Schmierstoffleitung zwischen Schmierstoffpumpe und Schmierstoffeinlass 6 des Verteilerelements druckentlastet. Bei entsprechender Auslegung der ersten Rückstellfeder 7 reicht gegenüber herkömmlichen Verteilern eine geringere Druckabsenkung auf einen gewünschten Restdruck von bspw. 90 bar (im Gegensatz zu 45 bar bei herkömmlichen Verteilerelementen) aus. Die erste Rückstellfeder 7 verschiebt dabei den Ventilkolben 1 aus der zunächst eingenommenen Zwischenlage (nach unten) bis in die in Fig. 1 dargestellte Endlage (welche für den folgenden Schmierzyklus die Anfangslage darstellt). Jetzt ist die Dosierkammer 4 über den Verbindungskanal 5, den wieder freigegebenen Durchlass 8 und die Bohrung 2 mit der Zuteilkammer 3 verbunden.

Die zweite Rückstellfeder 10 kann nunmehr in der Dosierkammer 4 vorhandenen Schmierstoff über den erwähnten Verbindungsweg in die Zuteilkammer 3 überführen und diese füllen. Wenn der Zuteilkolben 9 aufgrund der Wirkung der zweiten Rückstellfeder 10 seine in Fig. 1 dargestellte obere Endlage erreicht hat, ist der Verteiler insgesamt in diesem Schmierzyklus in seine Ausgangslage zurückgekehrt und ein neuer Schmierzyklus kann beginnen, Die Auslegung der zweiten Rückstellfeder 10 unabhängig von der ersten Rückstellfeder 7 gewährleistet den gewünschten niedrigen minimalen Arbeitsdruck.

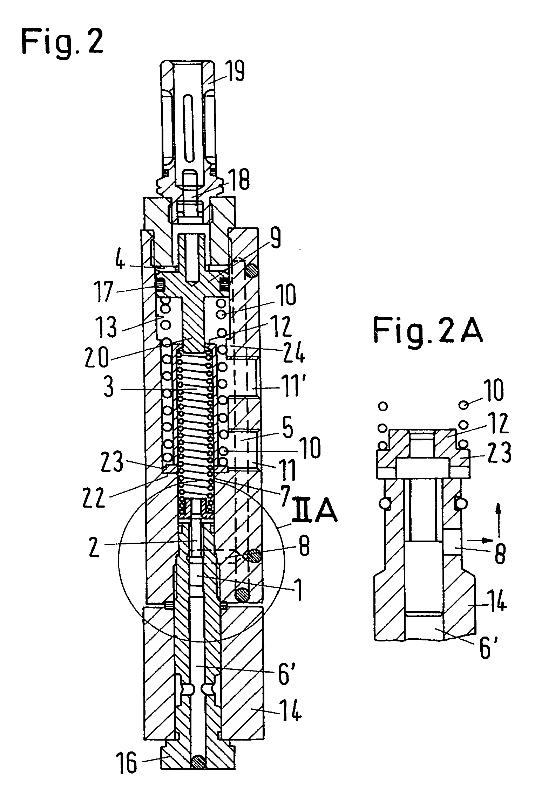

Die in den Figuren 2 und 2A dargestellte Ausführungsform eines erfindungsgemäßen Verteilerelements unterscheidet sich in seiner grundsätzlichen Funktion nicht von dem in den Figuren 1 bis 1B₂ dargestellten Verteilerelement. Konstruktiv ist dieses Verteilerelement jedoch dadurch etwas anders aufgebaut, dass der Abstützkörper 12 als zu den beiden Rückstellfedern 7 und 10 koaxialer langgestreckter Hülsenkörper ausgebildet ist, in welchem der obere Abschnitt der ersten Rückstellfeder 7 aufgenommen ist. Die erste Rückstellfeder 7 stützt sich dabei an einer oberen, d.h. an dem dem Ventilkörper 1 abgewandten Ende des Abstützkörpers 12 vorgesehenen radial nach innen weisenden Umbördelung 24 ab. Umgekehrt umgreift die zweite Rückstellfeder 10 den hülsenförmigen Abschnittskörper 12 mit ihrem dem Ventilkörper 1 zugewandten Ende und stützt sich dabei auf einem radial nach außen wegragenden Fußflansch 23 des Abstützkörpers 12 ab. Auf diese Weise können die beiden Rückstellfedern 7, 10 trotz gleich bleibender Länge des Verteilerelements verhältnismäßig große Längen mit entsprechender Federcharakteristik haben.

### Bezugszeichenliste

- 1: Ventilkolben
- 2: Bohrung
- 3: Zuteilkammer
- 4: Dosierkammer
- 5: Verbindungskanal
- 6, 6': Schmierstoffeinlass, Schmierstoffeinlasskanal
- 7: erste Rückstellfeder
- 8: Durchlass
- 9: Zuteilkolben
- 10: zweite Rückstellfeder
- 11, 11': Schmierstoffauslass bzw. -durchlass
- 12: Abstützkörper
- 13: Durchgangskanal
- 14: Ventilgehäuse
- 15: Gewindeverbindung
- 16: unterer Verschlusskörper
- 17: Umfangsdichtung
- 18: Kontrollstiftabschnitt
- 19: oberer Verschlusskörper
- 20: Verlängerung
- 21: Verschlussschraube
- 22: Anlageschulter
- 23: Fußflansch
- 24: Umbördelung

## Patentansprüche

1. Verteilerelement zur Dosierung von Schmierstoffen für Schmieranlagen, mit einem eine Bohrung (2) aufweisenden Ventilkolben (1), welcher aus einer Ausgangslage, in welcher die Bohrung (2) eine Verbindung zwischen einer Zuteilkammer (3) und einer Dosierkammer (4) über einen Verbindungskanal (5) freigibt, unter dem an einem Schmierstoffeinlass (6) anstehenden Schmierstoffdruck gegen die Wirkung einer ersten Rückstellfeder (7) bis in eine Dosierlage verschiebbar ist, in welcher der Ventilkolben (1) einen Durchlass (8) von dem Schmierstoffeinlass (6) zu dem Verbindungskanal (5) und damit der Dosierkammer (4) freigibt, sowie mit einem Zuteilkolben (9), **dadurch gekennzeichnet dass** dieser Zuteilkolben unter der Wirkung von in die Dosierkammer (4) eintretendem Schmierstoff gegen die Wirkung einer zweiten Rückstellfeder (10) aus einer Ausgangslage verschiebbar ist und **dadurch** die in der Zuteilkammer (3) zwischen Ventilkolben (1) und Zuteilkolben (9) vorhandene Schmierstoffmenge in einen Schmierstoffauslass (11) verdrängt, wobei der Ventilkolben (1) bis zum Erreichen des Druckausgleichspunktes in eine Zwischenlage verfahrbar ist, in welcher er den Durchlass (8) von dem Schmierstoffeinlass (6) zu dem Verbindungskanal (5) und damit der Dosierkammer (4) absperrt, und wobei bei Druckentlastung an dem Schmierstoffeinlass (6) der Ventilkolben (1) von der ersten Rückstellfeder (7) in seine Ausgangslage und der Zuteilkolben (9) von der zweiten Rückstellfeder (10) in seine Ausgangslage zurückführbar ist.

2. Verteilerelement nach Anspruch 1, **dadurch gekennzeichnet, dass** zwischen der ersten Rückstellfeder (7) und der zweiten Rückstellfeder (10) ein im Wesentlichen hohlzylindrischer Abstützkörper (12) für die beiden Rückstellfedern (7, 10) angeordnet ist.

3. Verteilerelement nach Anspruch 1 oder 2, **dadurch gekennzeichnet, dass** der Ventilkolben (1), der Zuteilkolben (9), der Abstützkörper (12) und die beiden Rückstellfedern (7, 10) in einem gemeinsamen Durchgangskanal (13) eines Ventilgehäuses (14) axial zueinander ausgerichtet angeordnet sind.

4. Verteilerelement nach einem der vorhergehenden Ansprüche, **dadurch gekennzeichnet, dass** die zweite Rückstellfeder (10) als Wendelfeder den Zuteilkolben (9) umgibt.

5. Verteilerelement nach einem der vorhergehenden Ansprüche, **dadurch gekennzeichnet, dass** die zweite als Wendelfeder ausgebildete Rückstellfeder (10) jedenfalls mit ihrem dem Ventilkolben (1) zugewandten Ende die ebenfalls als Wendelfeder ausgebildete erste Rückstellfeder (7) umgibt.

6. Verfieilerelement nach einem der vorhergehenden Ansprüche, **dadurch gekennzeichnet, dass** die erste als Wendelfeder ausgebildete Rückstellfeder (7) mit ihrem dem Zuteilkolben (9) zugewandten Ende in einem hülsenförmigen Abstützkörper (12) aufgenommen ist, welcher von der als Wendelfeder ausgebildeten zweiten Rückstellfeder (10) umgeben ist.

7. Verteilerelement nach Anspruch 6, **dadurch gekennzeichnet, dass** sich die zweite Rückstellfeder (10) auf einem Fußflansch (23) des Abstützkörpers (12) abstützt.

8. Verteilerelement nach einem der vorhergehenden Ansprüche, **dadurch gekennzeichnet, dass** sich der Abstützkörper (12) auf einer von dem Ventilkörper (1) abgewandten Anlageschulter (22) des Ventilgehäuses (14) abstützt.

## Claims

1. Distributor element for the metering of lubricants for lubricating installations with a valve piston (1) comprising a bore (2), which valve piston moves under the pressure of a lubricant operating at a lubricant inlet (6) against the force of a return spring (7) from a starting position in which the bore (2) releases a connection between a dispensing chamber (3) and a metering chamber (4) via a connecting passage (5) to a metering position in which the valve piston (1) releases a passage (8) from the lubricant inlet (6) to the connecting passage (5) and thus to the metering chamber (4), and furthermore comprising a dispensing piston (9), **characterized in that** said dispensing piston under the effect of a lubricant entering the metering chamber (4) moves against the force of a second return spring (10) from a starting position and thereby displaces the lubricant volume present in the dispensing chamber (3) between the valve piston (1) and the dispensing piston (9) in a lubricant outlet (11) whereby the valve piston (1) until the pressure compensation point has been reached can be moved into an intermediate position in which the valve piston blocks the passage (8) from the lubricant inlet (6) to the connecting passage (5) and therefore to the metering chamber (4) and whereby upon pressure relief at the lubricant inlet (6), the valve piston (1) is moved back to its starting position by the first return spring (7) and the dispensing piston (9) is moved back to its starting position by the second return spring (19).

2. Distributor according to claim 1, **characterized in that** an essentially hollow cylindrical supporting body (12) for the two return springs (7, 10) is arranged between the first return spring (7) and the second return spring (10).

3. Distributor according to claim 1 or 2, **characterized in that** the valve piston (1), the dispensing piston (9), the supporting body (12) and the two return springs (7, 10) are arranged in a mutually axial configuration in a common passage (13) of a valve housing (14).

4. Distributor according to one of the preceding claims, **characterized in that** the second return spring (10) is a spiral coiled spring surrounding the dispensing piston (9).

5. Distributor according to one of the preceding claims, **characterized in that** the second return spring (10) which is spiral coiled spring in any case with its end facing the valve piston (1) surrounds the first return spring (7) which also is a spiral coiled spring.

6. Distributor according to one of the preceding claims, **characterized in that** the first return spring (7) in the form of a spiral coiled spring is accommodated with its end that faces the dispensing piston (9) in a cylindrical supporting body (12) which is surrounded by the second return spring (10) that also is a spiral coiled spring.

7. Distributor according to claim 6, **characterized in that** the second return spring (10) is braced on a bottom flange (23) of the supporting body (12).

8. Distributor according to one of the preceding claims, **characterized in that** the supporting body (12) is braced on a bearing shoulder (22) of the valve housing (14), this shoulder being at the opposite end from the valve piston (1).

## Revendications

1. Élément distributeur pour le dosage de lubrifiants pour des installations de lubrification, avec un piston à soupape (1) présentant un alésage (2) et pouvant être déplacé d'une position de départ dans laquelle l'alésage (2) libère une jonction entre une chambre de répartition (3) et une chambre de dosage (4) via un canal de jonction (5) jusqu'à une position de dosage contre l'effet d'un premier ressort de rappel (7) sous l'effet de la pression du lubrifiant régnant dans une entrée de lubrifiant (6), dans laquelle position de dosage le piston à soupape (1) libère un passage (8) depuis l'entrée de lubrifiant (6) jusqu'au canal de jonction (5) et par conséquent la chambre de dosage (4), ainsi qu'avec un piston répartiteur (9), **caractérisé en ce que** ce piston répartiteur, sous l'effet du lubrifiant pénétrant dans la chambre de dosage (4), peut être déplacé contre l'effet d'un deuxième ressort de rappel (10) d'une position de départ et ainsi chasse la quantité de lubrifiant présente dans la chambre de répartition (3) entre le piston à soupape (1) et le piston répartiteur (9) dans une sortie de lubrifiant (11), le piston à soupape (1) pouvant être déplacé dans une position intermédiaire jusqu'à ce que le point d'équilibre des pressions soit atteint dans laquelle il obture le passage (8) depuis l'entrée du lubrifiant (6) jusqu'au canal de jonction (5) et ainsi la chambre de dosage, et lors d'une décompression dans l'entrée de lubrifiant (6) le piston à soupape (1) pouvant être ramené par le premier ressort de rappel (7) dans sa position de départ et le piston répartiteur (9) pouvant être ramené par le deuxième ressort de rappel (10) dans sa position de départ.

2. Élément distributeur selon la revendication 1, **caractérisé en ce qu'**entre le premier ressort de rappel (7) et le deuxième ressort de rappel (10) est disposé un élément d'appui (12) essentiellement creux et cylindrique pour les deux ressorts de rappel (7, 10).

3. Élément distributeur selon la revendication 1 ou 2, **caractérisé en ce que** le piston à soupape (1), le piston répartiteur (9), le corps d'appui (12) et les deux ressorts de rappel (7, 10) sont disposés alignés axialement les uns par rapport aux autres dans un canal de passage (13) commun d'une cage de soupape (14).

4. Élément distributeur selon l'une des revendications précédentes, **caractérisé en ce que** le deuxième ressort de rappel (10), en tant que ressort à spirale, entoure le piston répartiteur (9).

5. Élément distributeur selon l'une des revendications précédentes, **caractérisé en ce que** le deuxième ressort de rappel (10) conçu sous la forme d'un ressort à spirale entoure au moins avec son extrémité dirigée vers le piston à soupape (1) le premier ressort de rappel (7) conçu également sous la forme d'un ressort à spirale.

6. Élément distributeur selon l'une des revendications précédentes, **caractérisé en ce que** le premier ressort de rappel (7) conçu sous la forme d'un ressort à spirale est reçu par son extrémité dirigée vers le piston répartiteur (9) dans un corps d'appui (12) en forme de manchon, lequel est entouré par le deuxième ressort de rappel (10) conçu sous la forme d'un ressort à spirale.

7. Élément distributeur selon la revendication 6, **caractérisé en ce que** le deuxième ressort de rappel (10) s'appuie sur une collerette inférieure (23) du corps d'appui (12).

8. Élément distributeur selon l'une des revendications précédentes, **caractérisé en ce que** le corps d'appui (12) s'appuie contre un épaulement de butée (22) de la cage de piston (14) dirigé à l'opposé du piston à soupape (1).
